# EUROPÄISCHE PATENTSCHRIFT

(11) **EP 3 353 185 B1**
(45) Veröffentlichungstag und Bekanntmachung des Hinweises auf die Patenterteilung: **23.10.2019**
(21) Anmeldenummer: 16763724.8
(22) Anmeldetag: 07.09.2016
(51) Int. Cl.: C07F 9/94, B01J 31/02, C07B 37/02, C07B 37/04, C07B 41/06, C07B 41/12, C07B 43/08, C07F 9/30

(54) **BISMUTPERFLUORALKYLPHOSPHINATE ALS LEWIS-SÄURE KATALYSATOREN**
BISMUTH PERFLUOROALKYLPHOSPHINATES AS LEWIS ACID CATALYSTS
PERFLUORALKYLPHOSPHINATES DE BISMUTH UTILISÉS COMME CATALYSEURS DE TYPE ACIDE DE LEWIS

(30) Priorität: 23.09.2015 DE 102015012194
(43) Veröffentlichungstag der Anmeldung: 01.08.2018
(73) Patentinhaber: Merck Patent GmbH, 64293 Darmstadt (DE)
(72) Erfinder: HOGE, Berthold, Theo, 33604 Bielefeld (DE); SOLYNTJES, Sven, Joerg-Ruediger, August, 33613 Bielefeld (DE); IGNATIEV, Nikolai (Mykola), 47058 Duisburg (DE)
(86) Internationale Anmeldenummer: PCT/EP2016/001509
(87) Internationale Veröffentlichungsnummer: WO 2017/050419

(56) Entgegenhaltungen:
- DE-A1-102013 011 081
- MAGNUS RUEPING ET AL: "A review of new developments in the Friedel-Crafts alkylation - From green chemistry to asymmetric catalysis", BEILSTEIN JOURNAL OF ORGANIC CHEMISTRY, Bd. 6, 1. Januar 2010 (2010-01-01), XP055316411, DOI: 10.3762/bjoc.6.6
- JORGE SALVADOR ET AL: "Recent Advances of Bismuth(III) Salts in Organic Chemistry: Application to the Synthesis of Aliphatics, Alicyclics, Aromatics, Amino Acids and Peptides, Terpenes and Steroids of Pharmaceutical Interest", MINI-REVIEWS IN ORGANIC CHEMISTRY, Bd. 6, Nr. 4, 1. November 2009 (2009-11-01), Seiten 241-274, XP055316413, US ISSN: 1570-193X, DOI: 10.2174/157019309789371587
- RAMESH K. METRE ET AL: "Bismuth Phosphinates: Temperature-Dependent Formation of a Macrocycle and 1D Coordination Polymer", PHOSPHORUS, SULFUR AND SILICON AND THE RELATED ELEMENTS, Bd. 190, Nr. 12, 19. Oktober 2015 (2015-10-19), Seiten 2134-2141, XP055316414, US ISSN: 1042-6507, DOI: 10.1080/10426507.2015.1072192

## Beschreibung

Die Erfindung betrifft Bismutperfluoralkylphosphinate als Lewis-Säure-Katalysatoren nach Anspruch 9, die Verbindungen nach Anspruch 1 sowie deren Verfahren zur Herstellung.

Die Katalyse mit Lewis-Säuren ist eine weit verbreitete Methodik in der Organischen Synthese und für die industrielle Herstellung verschiedener Substanzen von herausragender Bedeutung. Zu den zahlreichen wichtigen industriellen Prozessen, die durch Lewis-Säuren katalysiert werden, gehören zum Beispiel Friedel-Crafts-Alkylierungen und -Acylierungen von Aromaten, Gattermann-Koch-Reaktionen, Beckmann- und Fries-Umlagerungen, Mukaiyama-Aldol-Kondensationen *[*Acid Catalysis in Modern Organic Synthesis, H. Yamamoto and K. Ishihara (Eds.), WILEY-VCH, Weinheim, 2008].

G. N. Lewis definiert eine Säure als Substanz, die als Elektronenpaarakzeptor agieren kann. Dieser Definition entsprechend sind Lewis-Säuren Elektronenmangelmoleküle bzw. -spezies. Die üblicherweise verwendeten Lewis-sauren Katalysatoren wie AlCl₃, TiCl₄, ZnCl₂ und BF₃-Diethyletherat sind feuchtigkeitsempfindlich und können in der Regel nach Beendigung der Reaktion nicht zurückgewonnen werden.

Weitere bekannte Lewis-Säuren sind Bismutsalze wie BiCl₃, BiBr₃ und Bi(OSO₂CF₃)₃, wie in T. Ollevier, org. Biomol. Chem., 2013, 11, 2740-2755 beschrieben. Bei Verwendung von BiCl₃ als Katalysator ist jedoch eine hohe Beladung notwendig, in der Regel 10 mol%, und die Freisetzung von HCl kann zu Korrosion der Reaktionsappartur führen, falls beispielsweise Stahlgefäße verwendet werden. Der am meisten bekannte Bismut-Katalysator ist Bismuttris(trifluormethansulfonat). Der Nachteil dieser Verbindung ist die Hydrolyseempfindlichkeit bei Anwesenheit von Wasser und dessen Reaktivität mit Alkoholen und Aminen.

F.H.A. Kwie et al, Synthetic Communications, 40, 2010, 1082-1087 oder T.C. Wabnitz et al, Chem. Eur. J. 10, 2004, 484-493 beschreiben, dass eventuell die aus dem Bismuttris(trifluormethansulfonat) freigesetzte Trifluormethansulfonsäure für die Katalyse verantwortlich sein könnte.

In S. Kobayashi et al, Chem. Eur. J., 12, 2006, 5954-5960 wird vorgeschlagen, dass Bi(III)-Salze durch Verwendung von organischen Liganden, wie beispielsweise 2,2'-Bipyridinderivaten stabilisiert werden könnten.

R. Qiu et al, Adv. Synth. Catal, 352, 2010, 153 berichten über die Verwendung von Bismutperfluoroctansulfonaten als Katalysatoren.

In DE102013011081 werdenSeltenerdmetallphosphinate beschrieben und deren Verwendung als Lewis-Säure-Katalvsatoren.

Magnus Rueping et al, Beilstein Journal of Organic Chemistry 2010, 6, 6, 1-24 beschreiben Bismut-Triflate und deren Verwendung als Lewis-Säure-Katalysatoren.

Jorge Salvador et al. Mini-Reviews in Organic Chemistry, 2009, 6, 4, 241 - 274 beschreiben Bismut-Salze, insbesondere Halogenide und Triflate, und deren Verwendung in der Katalyse.

Es besteht deshalb auch weiterhin ein Bedarf nach alternativen Lewis-Säure-Katalysatoren, damit die Lewis-Säure-katalysierten Reaktionen optimal durchgeführt werden können.

Die Aufgabe der vorliegenden Erfindung ist daher alternative Lewis-Säure-Katalysatoren zu entwickeln, welche eine Reaktionsführung der gewünschten katalysierten Reaktionen in guter Ausbeute ermöglichen.

Überraschenderweise wurde gefunden, dass spezielle Bismutperfluoralkylphosphinate katalytisch aktiv sind und deutlich weniger hydrolyseempfindlich als Bismuttris(trifluormethansulfonat) sind.

Der erste Gegenstand der Erfindung sind daher Verbindungen der Formel (Ia) und (Ib)

ArₓBi[OP(O)(R_{f})₂]₃₋ₓ (Ia),

Ar₃Bi[OP(O)(R_{f})₂]₂ (Ib)

wobei
Ar jeweils unabhängig voneinander Phenyl, Naphthyl, Anthracenyl oder Phenanthryl bedeutet, das einfach oder mehrfach durch Halogen, Alkyl, fluoriertes Alkyl, OAlkyl, NO₂ oder CN substituiert sein kann;
R_{f} jeweils unabhängig voneinander eine geradkettige oder verzweigte Perfluoralkylgruppe mit 1 bis 8 C-Atomen bedeutet und
x 1 oder 2 bedeutet.

Eine Arylgruppe mit 6 bis 12 C-Atomen bedeutet Phenyl, Naphthyl, Anthracenyl oder Phenanthryl, das einfach oder mehrfach durch Halogen, Alkyl, fluoriertes Alkyl, OAlkyl, NO₂ oder CN substituiert sein kann. "Alkyl" bedeutet eine lineare oder verzweigte Alkylgruppe mit 1 bis 12 C-Atomen.

Halogen bedeutet F, Cl, Br oder I. Halogen bedeutet bevorzugt F oder Cl.

"Fluoriertes Alkyl" ist eine lineare oder verzweigte fluorierte Alkylgruppe mit 1 bis 10 C-Atomen, wobei mindestens ein H-Atom einer linearen oder verzweigten Alkylgrupe mit 1 bis 10 C-Atomen durch ein F-Atom ersetzt ist. Es können auch alle H-Atome durch F-Atome ersetzt sein.

Bevorzugt ist Ar unsubstituiertes oder einfach durch Halogen, Alkyl, fluoriertes Alkyl, OAlkyl, NO₂ oder CN substituiertes Phenyl. Besonders bevorzugt ist Ar eine unsubstituierte Phenylgruppe oder eine einfach mit Alkyl oder mit fluoriertem Alkyl substituierte Phenylgruppe. Ganz besonders bevorzugt ist Ar eine unsubstituierte Phenylgruppe.

Eine geradkettige oder verzweigte Alkylgruppe mit 1 bis 12 C-Atomen ist beispielsweise Methyl, Ethyl, *iso*-Propyl, Propyl, Butyl, *sec*-Butyl oder *tert-*Butyl, Pentyl, 1-, 2- or 3-Methylbutyl, 1,1-, 1,2- or 2,2-Dimethylpropyl, 1-Ethylpropyl, *n*-Hexyl, *n*-Heptyl, *n*-Octyl, *n*-Nonyl, *n*-Decyl, *n*-Undecyl oder *n*-Dodecyl.

Bevorzugt ist "fluoriertes Alkyl" eine geradkettige oder verzweigte fluorierte Alkylgruppe mit 1 bis 4 C-Atomen. Besonders bevorzugt ist "fluoriertes Alkyl" Trifluormethyl, Difluormethyl, 2,2,2-Trifluorethyl, Pentafluorethyl, Heptafluor-*iso*-Propyl, Heptafluorpropyl und Nonafluorbutyl.

In einer bevorzugten Ausführungsform der Erfindung ist die Arylgruppe Ar bevorzugt bei jedem Auftreten gleich.

Ein weiterer Gegenstand der Erfindung sind Verbindungen der Formel (Ia) und der Formel (Ib), wie zuvor beschrieben, wobei Ar bei jedem Auftreten gleich ist.

Die Perfluoralkylgruppe R_{f} ist vorzugsweise Trifluormethyl, Pentafluorethyl, *n*-Heptafluorpropyl, *iso*-Heptafluorpropyl, *n*-Nonafluorbutyl, *sec*.-Nonafluorbutyl oder *tert*.-Nonafluorbutyl. Die Perfluoralkylgruppe R_{f} steht besonders bevorzugt für Pentafluorethyl oder *n*-Nonafluorbutyl.

In einer bevorzugten Ausführungsform der Erfindung ist die Perfluoralkylgruppe R_{f} bevorzugt bei jedem Auftreten gleich.

Der Gegenstand der Erfindung sind daher weiterhin Verbindungen der Formel (Ia) und (Ib), wie zuvor beschrieben oder bevorzugt beschrieben, wobei die Perfluoralkylgruppe R_{f} bei jedem Auftreten gleich ist.

Eine besonders bevorzugte Verbindung der Formel (Ia) ist Phenylbis(pentafluorethyl-phosphinyl)bismut(III). Eine besonders bevorzugte Verbindung der Formel (Ib) ist Triphenylbis[bis(pentafluorethylphosphinyl)]bismut(V).

Verbindungen der Formel (Ia), wie zuvor beschrieben oder bevorzugt beschrieben, wobei x 0 bedeutet, können hergestellt werden, indem Bismut mit einer Verbindung der Formel (II)

HOP(O)(R_{f})₂ (II),

wobei
R_{f} jeweils unabhängig voneinander eine geradkettige oder verzweigte Perfluoralkylgruppe mit 1 bis 8 C-Atomen bedeutet, umgesetzt wird.

Bismut kann in jeder existierenden Form von Metallpartikeln eingesetzt werden, beispielsweise in Form von Pulvern oder Spänen. Bevorzugt wird Bismut als Bismutpulver eingesetzt.

Die Verbindungen der Formel (II) sind bekannte Perfluoralkylphosphinsäuren, die zum Teil kommerziell erhältlich sind oder durch bekannte Syntheseverfahren zugänglich sind, wie beispielsweise in Nikolai V. Ignat'ev et al, Perfluoroalkylphosphorus acids: Synthesis, properties and applications in catalysis, Chimica Oggi/Chemistry Today, vol. 29, No. 5, September/Oktober 2011 beschrieben.

Die Umsetzung kann in Anwesenheit oder in Abwesenheit von Lösemitteln durchgeführt werden.

Geeignete Lösemittel sind beispielsweise Methanol, Ethanol, iso-Propanol, Acetonitril, Propionitril, Benzonitril, Nitromethan, Diethylether, Methyl-tert-Butylether, 1,4-Dioxan, 2-Methyltetrahydrofuran, Dichlormethan, 1,2-Dichlorethan, Monoglyme, Diglyme, Triglyme, Chlorbenzol und ionische Flüssigkeiten oder ein Gemisch der oben genannten Lösemitteln. Einzelheiten über geeignete ionische Flüssigkeiten werden nachfolgend beschrieben und gelten auch für diese Umsetzung.

Die Reaktionstemperatur liegt vorzugsweise zwischen 20°C und 180°C, besonders bevorzugt zwischen 60°C und 160°C, ganz besonders bevorzugt zwischen 80°C und 140°C.

Es schließt sich bevorzugt eine geeignete Aufreinigungsmethode an. Beispielsweise wird die Reaktionsmischung mit einem geeigneten Lösemittel verdünnt, beispielsweise Methanol, und das nicht umgesetzte Metall wird abfiltriert. Das Filtrat wird vom Lösemittel befreit, getrocknet und eventuell durch Waschen, vorzugsweise mit Diethylether, und Trocknen weiter gereinigt.

Ein weiterer Gegenstand der Erfindung ist ein Verfahren zur Herstellung von Verbindungen der Formel (la), wie zuvor beschrieben oder bevorzugt beschrieben, wobei x 1 oder 2 bedeutet, dadurch gekennzeichnet, dass eine Verbindung der Formel (II)

HOP(O)(R_{f})₂ (II),

wobei
Rf jeweils unabhängig voneinander eine geradkettige oder verzweigte Perfluoralkylgruppe mit 1 bis 8 C-Atomen bedeutet,
mit Triarylbismutan umgesetzt wird, wobei das Aryl jeweils unabhängig voneinander eine Arylgruppe mit 6 bis 12 C-Atomen bedeutet, wie zuvor definiert.

Die Umsetzung, wie zuvor beschrieben, findet bevorzugt in einer Inertgasatmosphäre statt. Es ist besonders bevorzugt, wenn der Sauerstoffgehalt maximal 1000 ppm ist.

Die Bedingungen hinsichtlich des Sauerstoffgehalts gelten nicht für die Aufarbeitung nach erfolgreicher Umsetzung der Verbindungen der Formel (II), wie nachfolgend beschrieben.

Triarylbismutane sind kommerziell erhältlich, beispielsweise Triphenylbismutan von der Firma ABCR, oder können nach bekannten Syntheseverfahren hergestellt werden, wie in P. Pfeiffer et al, Ber. Dtsch. Chem. Ges. 1904, 37, 4620-4623 beschrieben. Eine bevorzugte Herstellung ist im Beispielteil beschrieben. Die Definition der Arylgruppe und bevorzugte Arylgruppen, wie zuvor beschrieben, gelten für diese Umsetzungen entsprechend. Triarylbismutan kann beispielsweise alternativ durch Reaktion von Aryl-Lithium-Verbindungen, wobei Aryl jeweils unabhängig voneinander eine Arylgruppe mit 6 bis 12 C-Atomen bedeutet, mit Bismuttrichlorid hergestellt werden.

Die Reaktion der Verbindungen der Formel (II) mit Triarylbismutan findet bevorzugt in Anwesenheit eines Lösemittels statt.

Geeignete Lösemittel sind beispielsweise Alkohole wie Methanol oder Ethanol.

Die Reaktionstemperatur liegt vorzugsweise zwischen 20°C und 180°C, besonders bevorzugt zwischen 60°C und 160°C, ganz besonders bevorzugt zwischen 80°C und 140°C.

Es schließt sich bevorzugt eine geeignete Aufreinigungsmethode an. Bevorzugt werden alle flüchtigen Bestandteile im Hochvakuum entfernt und der Rückstand wird entsprechend gewaschen und getrocknet. Bevorzugt wird der Rückstand mit Wasser gewaschen.

Ein weiterer Gegenstand der Erfindung ist ein Verfahren zur Herstellung von Verbindungen der Formel (Ib), wie zuvor beschrieben oder bevorzugt beschrieben, dadurch gekennzeichnet, dass Triarylbismut(V)dichlorid, wobei Aryl jeweils unabhängig voneinander eine Arylgruppe mit 6 bis 12 C-Atomen bedeutet, die unsubstituiert oder substituiert sein kann, wie zuvor definiert.
mit einer Verbindung der Formel (III) umgesetzt wird,

Ag[(R_{f})₂PO₂] (III),

wobei
Rf jeweils unabhängig voneinander eine geradkettige oder verzweigte Perfluoralkylgruppe mit 1 bis 8 C-Atomen bedeutet.

Die Verbindungen der Formel (III) sind Silbersalze der entsprechenden Bis(perfluoralkyl)phosphinsäure und können nach bekannten Verfahren hergestellt werden. Geeignet ist eine Umsetzung von Silberoxid oder Silbercarbonat mit der Bis(perfluoralkyl)phosphinsäure. Weitere Reaktionsbedingungen sind dem Fachmann bekannt und sind beispielsweise im Beispielteil beschrieben. Die Ausführungen zu geeigneten und bevorzugten Gruppen Rf für Verbindungen der Formel (Ia) gelten entsprechend auch für Verbindungen der Formel (Ib).

Triarylbismut(V)dichlorid kann beispielsweise durch Umsetzung von Triarylbismutan mit Chlorierungsmitteln hergestellt werden. Geeignete Chlorierungsmittel sind Cl₂, POCl₃, PCl₅, SOCl₂ oder SO₂Cl₂. Bevorzugt wird SO₂Cl₂ eingesetzt. Die Reaktionsbedingungen sind für den Fachmann aus ähnlichen Reaktionen ableitbar und sind beispielsweise im Beispielteil beschrieben.

Die Umsetzung zu Triarylbismut(V)dichlorid, wie zuvor beschrieben, findet bevorzugt in einer Inertgasatmosphäre statt, deren Wassergehalt maximal 1000 ppm ist.

Ein weiterer Gegenstand der Erfindung ist ein Verfahren zur Herstellung von Verbindungen der Formel (Ib), wie zuvor beschrieben oder bevorzugt beschrieben, dadurch gekennzeichnet, dass eine Verbindung der Formel (II),

HOP(O)(R_{f})₂ (II),

wobei
R_{f} jeweils unabhängig voneinander eine geradkettige oder verzweigte Perfluoralkylgruppe mit 1 bis 8 C-Atomen bedeutet,
mit Triarylbismut(V)carbonat, Triarylbismut(V)diacetat oder Triarylbismut(V)dichlorid umgesetzt wird, wobei das Aryl jeweils unabhängig voneinander eine Arylgruppe mit 6 bis 12 C-Atomen bedeutet, wie zuvor definiert.

Triarylbismut(V)carbonate sind teilweise kommerziell erhältlich, beispielweise Triphenylbismut(V)carbonat der Firma Sigma-Aldrich. Triarylbismut(V)diacetate sind teilweise kommerziell erhältlich, beispielsweise Triphenylbismut(V)diacetat der Firma Sigma-Aldrich. Geeignete Lösemittel sind beispielsweise Methanol, Ethanol, iso-Propanol, Acetonitril, Propionitril, Benzonitril, Nitromethan, Diethylether, Methyl-tert-Butylether, 1,4-Dioxan, 2-Methyltetrahydrofuran, Dichlormethan, 1,2-Dichlorethan, Monoglyme, Diglyme, Triglyme, Chlorbenzol und ionische Flüssigkeiten oder ein Gemisch der oben genannten Lösemitteln. Einzelheiten über geeignete ionische Flüssigkeiten werden nachfolgend beschrieben und gelten auch für diese Umsetzung.

Die Reaktionstemperatur liegt vorzugsweise zwischen 20°C und 180°C, besonders bevorzugt zwischen 60°C und 160°C, ganz besonders bevorzugt zwischen 80°C und 140°C.

Es schließt sich bevorzugt eine geeignete Aufreinigungsmethode an. Beispielsweise wird die Reaktionsmischung mit einem geeigneten Lösemittel verdünnt, beispielsweise Methanol, und das nicht umgesetzte Metall wird abfiltriert. Das Filtrat wird vom Lösemittel befreit, getrocknet und eventuell durch Waschen, vorzugsweise mit Diethylether, und Trocknen weiter gereinigt.

Ein weiterer Gegenstand der Erfindung ist die Verwendung der Verbindungen der Formel (Ia) und (Ib), wie zuvor beschrieben oder als bevorzugt beschrieben, als Lewis-Säure-Katalysator.

Ganz besonders bevorzugte Lewis-Säure-Katalysatoren sind die Verbindungen Phenylbis(pentafluorethyl-phosphinyl)bismut(III) und Triphenylbis[bis(pentafluorethylphosphinyl)]bismut(V).

Die Verbindungen der Formel (Ia), der Formel (Ib) oder die als bevorzugt angegebenen Verbindungen der Formel (Ia) und (Ib), werden bevorzugt in einer Katalysatormenge von 0,01 bis 20 mol% eingesetzt, bezogen auf das Startmaterial im Unterschuss. Besonders bevorzugt werden die Verbindungen der Formel (Ia) oder (Ib), wie zuvor beschrieben oder als bevorzugt beschrieben, in einer Menge von 0.1 mol% bis 10 mol% eingesetzt. Ganz besonders bevorzugt werden die Verbindungen der Formel (Ia) oder (Ib), wie zuvor beschrieben oder als bevorzugt beschrieben, in einer Menge von 1 mol% bis 5 mol% eingesetzt.Der Fachmann auf dem Gebiet der Katalyse ist in der Lage, die optimale Katalysatormenge für die entsprechende zu katalysierende Reaktion auszuwählen.

Die vergleichenden Versuche mit Bismuttris(trifluormethansulfonat) zeigen, dass die Verbindungen Phenylbis(pentafluorethyl-phosphinyl)bismut(III) und Bismuttris(pentafluorethylphosphinat) nicht hygroskopisch sind und bei Luft gelagert werden können. Die Verbindung Triphenylbis[bis(pentafluorethylphosphinyl)]bismut(V) ist ebenfalls nicht hygroskopisch.

In einer bevorzugten Ausführungsform der Erfindung wird die Lewis-Säurekatalysierte Reaktion ausgewählt aus einer Kondensationsreaktion, Alkoholyse, Aldol-Reaktion, Mukaiyama-Aldol-Reaktion, Gattermann-Koch-Reaktion, Beckmann- und Fries-Umlagerung, Friedel-Crafts-Acylierung, Friedel-Crafts-Alkylierung, Mannich-Reaktion, Diels-Alder-Reaktion, Aza-Diels-Alder-Reaktion, Baylis-Hillman-Reaktion, Reformatskyreaktion, Claisen-Umlagerung, Cyclisierungsreaktion nach Prins, Allylierung von Carbonaylverbindungen, Cyanierung von Aldehyden und Ketonen, Cyanosilylierung von Aldehyden und Ketonen, Strecker-Reaktion, 1,3-dipolaren Cycloaddition oder Michael-Reaktion.

Die Lewis-Säure-katalysierten Reaktionen können in Anwesenheit oder Abwesenheit von entsprechenden Lösemitteln durchgeführt werden.

Geeignete protische Lösemittel bei Verwendung der erfindungsgemäßen Lewis-Säure-Katalysatoren sind Ethanol, Methanol oder *iso*-Propanol.

Geeignete aprotische Lösemittel bei Verwendung der erfindungsgemäßen Lewis-Säure-Katalysatoren sind Acetonitril, Propionitril, Benzonitril, Nitromethan, Ethylacetat, Dimethylformamid, dimethylacetamid, Dimethylsulfoxid, N-Methylpyrrolidon, Diethylether, Methyl-tert-Butylether, 1,4-Dioxan, Tetrahydrofuran, 2-Methyltetrahydrofuran, Dichlormethan, 1,2-Dichlorethan, Monoglyme, Diglyme, Triglyme, Hexan, Heptan, Petrolether, Benzol und Toluol.

Auch die Klasse der ionischen Flüssigkeiten sind als Lösemittel bei Verwendung der erfindungsgemäßen Lewis-Säure-Katalysatoren geeignet.

Unter einer ionischen Flüssigkeit versteht man Salze, die in der Regel aus einem organischen Kation und einem anorganischen Anion bestehen. Sie enthalten keine neutralen Moleküle und weisen meistens Schmelzpunkte kleiner 373 K auf [Wasserscheid P, Keim W, 2000, Angew. Chem. 112: 3926]. Ionische Flüssigkeiten haben bedingt durch Ihren Salzcharakter einzigartige Stoffeigenschaften, wie beispielsweise einen niedrigen Dampfdruck, einen flüssigen Zustand über einen breiten Temperaturbereich, sind nicht entflammbar, zeigen eine hohe elektrische Leitfähigkeit und eine hohe elektrochemische und thermische Stabilität.

Geeignete ionische Flüssigkeiten als Lösemittel bei Verwendung der erfindungsgemäßen Lewis-Säure-Katalysatoren sind ionische Flüssigkeiten, die ein organisches Kation haben und deren Anion ausgewählt wird aus der Gruppe Cl⁻, Br⁻, [R₁COO]⁻, [R₁SO₃]⁻, [R₂COO]⁻, [R₂SO₃]⁻, [R₁OSO₃]⁻, [BF₄]⁻, [SO₄]²⁻, [HSO₄]¹⁻, [(R₁)₂P(O)O]⁻, [R₁P(O)O₂]²⁻ , [(R₁O)₂P(O)O]⁻, [(R₁O)P(O)O₂]²⁻, [(R₂)₂P(O)O]⁻, [R₂P(O)O₂]²⁻, [(FSO₂)₂N]⁻, [(R₂SO₂)₂N]⁻, [(R₂SO₂)₃C]⁻, [(FSO₂)₃C]⁻, [P(R₂)_{y}F_{6-y}]⁻, [BFₓ(R₂)₄₋ₓ]⁻, [BFₓ(CN)₄₋ₓ]⁻, [B(R₁)ₐ(CN)₄₋ₐ]⁻, [B(R₂)F₂(CN)]⁻ oder [B(R₂)F(CN)₂]⁻,
wobei R₁ jeweils unabhängig voneinander eine lineare oder verzweigte Alkylgruppe mit 1 bis 12 C-Atomen bedeutet,
R₂ jeweils unabhängig voneinander eine teilfluorierte oder perfluorierte lineare oder verzweigte Alkylgruppe mit 1 bis 12 C-Atomen bedeutet oder Pentafluorphenyl,
x die ganze Zahl 0, 1, 2 oder 3 bedeutet,
y die ganze Zahl 0, 1, 2, 3 oder 4 bedeutet und
a die ganze Zahl 1 oder 2 bedeutet.

Eine perfluorierte lineare oder verzweigte Alkylgruppe mit 1 bis 4 C-Atomen ist beispielsweise Trifluormethyl, Pentafluorethyl, *n*-Heptafluorpropyl, *iso-*Heptafluorpropyl, *n*-Nonafluorbutyl, *sec*-Nonafluorbutyl oder *tert-*Nonafluorbutyl. R₂ definiert in Analogie eine lineare oder verzweigte perfluorierte Alkylgruppe mit 1 bis 12 C-Atomen, umfassend die zuvor genannten Perfluoralkylgruppen und beispielsweise perfluoriertes *n*-Hexyl, perfluoriertes *n*-Heptyl, perfluoriertes *n*-Octyl, perfluoriertes Ethylhexyl, perfluoriertes *n*-Nonyl, perfluoriertes *n*-Decyl, perfluoriertes *n*-Undecyl oder perfluoriertes *n*-Dodecyl.

Bevorzugt ist R₂ Trifluormethyl, Pentafluorethyl oder Nonafluorbutyl, ganz besonders bevorzugt Trifluormethyl oder Pentafluorethyl.

Die Variable y ist bevorzugt 1, 2 oder 3, besonders bevorzugt 3.

Bevorzugte Lösemittel sind ionische Flüssigkeiten mit den Anionen [P(R₂)_{y}F_{6-y}]⁻ und [R₂SO₃]⁻, wobei R₂ und y eine zuvor angegebene oder als bevorzugt angegebene Bedeutung haben.

Besonders bevorzugte Lösemittel sind ionische Flüssigkeiten mit den Anionen [P(C₂F₅)₃F₃]⁻ und [CF₃SO₃]⁻.

Die organischen Kationen sind in der Regel nicht eingeschränkt und werden bevorzugt aus Imidazoliumkationen, Pyridiniumkationen oder Pyrrolidinium-Kationen ausgewählt, die entsprechend substituiert sein können, wie aus dem Stand der Technik bekannt.

Ganz besonders bevorzugt wird die ionische Flüssigkeit 1-Ethyl-3-methylimidazolium-tris(pentafluorethyl)trifluorphosphat {[EMIM][FAP]} und 1-Ethyl-3-methylimidazolium-triflat {[EMIM][OTf]} als Lösemittel ausgewählt.

Die folgenden Beispiele von Lewis-Säure-katalysierten Reaktionen zeigen, dass durch den Einsatz der Verbindungen der Formel (Ia) und (Ib), wie zuvor beschrieben oder als bevorzugt beschrieben, die Reaktionen bei Reaktionstemperaturen bis 120°C und unter Luft durchgeführt werden können. Die Menge an Katalysator bei den erfindungsgemäßen Lewis-Säure-Katalysatoren ist ebenfalls signifikant reduziert.

Die Eignung der Verbindungen der Formel (Ia) und (Ib) als Lewis-Säure-Katalysatoren ist anhand von Friedel-Crafts-Acylierungen, einer Friedel-Crafts-Alkylierung, Diels-Alder-Reaktion (Addition) und Strecker-Reaktion belegt. Diese Reaktionstypen sind repräsentativ für Lewis-Säurekatalysierte Reaktionen.

Auch ohne weitere Ausführungen wird davon ausgegangen, dass ein Fachmann die folgenden Beschreibungen im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiele:

### Beispiel 1. Darstellung von Phenylbis(pentafluorethylphosphinyl)bismut(III) PhBi[O(O)P(C₂F₅)₂]₂.

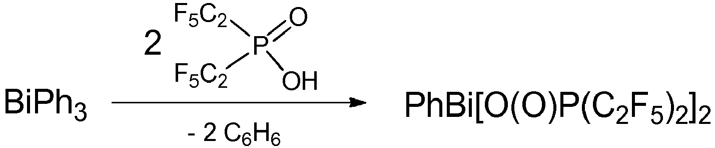

In einem 50 mL Schlenkkolben werden im Stickstoffgegenstrom 3.09 g (10.2 mmol) Bis(pentafluorethyl)phosphinsäure, (C₂F₅)₂P(O)OH, in 15 mL Methanol vorgelegt und langsam 1.49 g (3.4 mmol) Triphenylbismut zugegeben. Das Reaktionsgemisch wird für 24 Stunden zum Rückfluss erhitzt. Alle flüchtigen Bestandteile der Reaktionslösung werden im Hochvakuum entfernt. Der Rückstand zweimal mit Wasser gewaschen und der erhaltene Rückstand bei 90 °C im Hochvakuum getrocknet. Es wird ein farbloser, feinpulvriger Feststoff erhalten.
Ausbeute an PhBi[O(O)P(C₂F₅)₂]₂ (bezogen auf Triphenylbismut): 2.70 g (3.0 mmol, 89 %). Zersetzungspunkt: >550 °C.
**IR:** *ṽ* = 3074 (w), 1434 (w), 1309 (m), 1205 (vs), 1164 (s), 1135 (s), 1113 (s), 1070 (s), 999 (s), 963 (s), 750 (w), 728 (w), 689 (w), 634 (w), 599 (w), 569 (s), 498 (s), 442 (w), 428 (w).

**Tabelle:**

| **NMR-Daten von Phenylbis(pentafluorethylphosphinyl)bismut(III), PhBi[O(O)P(C₂F₅)₂]₂ in Aceton-d₆.** | | | | |
|---|---|---|---|---|
| Kern | δ [ppm] | Aufspaltung | J [Hz] | Zuordnung |
| ¹H | 9.2 | d | ³*J*_{HH} = 7.0 | ortho H |
| | 8.3 | t | ³*J*_{HH} = 7.7 | meta H |
| | 7.4 | t | ³*J*_{HH} = 7.4 | para H |
| ¹³C-CPD | 138.2 | | | ortho C |
| | 134.3 | | | meta C |
| | 130.4 | | | para C |
| ¹³C, ¹⁹F- | 119.4 | d | ³*J*_{CP} = 17.8 | **C**F₃CF₂ |
| DEPT135 | 112.1 | d | ²*J*_{CP} = 140.6 | CF₃**C**F₂ |
| ¹⁹F | -81.2 | s | - | C**F₃**CF₂ |
| | -125.5 | d | ²*J*_{FP} = 77.0 | CF₃C**F₂** |
| ³¹P | 0.6 | qui | ²*J*_{FP} = 77.0 | **P** |

**Tabelle: Massenspektrometrische Daten von Phenylbis(pentafluorethyl-phosphinyl)bismut (III), PhBi[O(O)P(C₂F₅)₂]₂, ESI negativ.**

| m/z | rel. Intensität (%) | Fragment |
|---|---|---|
| 1188.6 | 100 | |
| 964.7 | 90 | |
| 904.6 | 30 | |
| 602.6 | 40 | |
| 300.7 | 40 | [P(O)O(C₂F₅)₂]⁻ |

### Beispiel 2 nicht erfindungsgemäß. Darstellung von Bi(III)[(C₂F₅)₂PO₂]₃

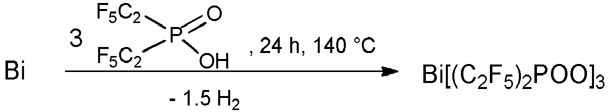

In einem 50 mL-Rundkolben werden 3.420 g (16.365 mmol) gemörsertes Bismutpulver vorgelegt und über eine Pipette mit 15.544 g (51.469 mmol) Bis(pentafluorethyl)-phosphinsäure versetzt. Es wird für 24 h auf 140 °C erhitzt.

Nach dem Abkühlen wird die gräuliche Reaktionsmischung in 25 mL Methanol aufgenommen, nicht umgesetztes Metallpulver (Bi) durch Filtration abgetrennt, das Filtrat am Rotationsverdampfer eingeengt und über Nacht im Hochvakuum getrocknet. Der Rückstand wird in 50 mL Diethylether aufgenommen, filtriert und viermal mit je 20 mL Diethylether gewaschen. Der erhaltene farblose Feststoff wird im Hochvakuum getrocknet. Ausbeute (bezogen auf Bismut): 5.09 g (4.58 mmol, 28 %).

### Zersetzungspunkt: >490 °C

**IR:** *ṽ* = 1314 (w), 1213 (s), 1174 (m), 1160 (m), 1122 (s), 1083 (m), 1056 (m), 1003 (m), 958 (s), 752 (w), 641 (w), 601 (m), 571 (m), 519 (m), 496 (m), 473 (w), 429 (m).

**Tabelle: NMR-Daten von Bi[(C₂F₅)₂PO₂]₃ in Methanol mit Aceton-d₆ als Standard bei RT.**

| Kern | δ [ppm] | Aufspaltung | J [Hz] | Zuordnung |
|---|---|---|---|---|
| ¹⁹F | -81.5 | s | - | C**F₃**CF₂ |
| | -126.0 | d | ²*J*_{FP} = 74.2 | CF₃C**F₂** |
| ³¹P | 0.6 | qui | ²*J*_{FP} = 74.2 | **P** |
| ¹³C, ¹⁹F- | 119.6 | d | ³*J*_{CP} = 17.0 | **C**F₃CF₂ |
| DEPT135 | 112.4 | d | ²*J*_{CP} = 138.2 | CF₃**C**F₂ |

Es werden keine ¹H Signale im ¹H-NMR Spektrum für die Lösung Bi[(C₂F₅)₂PO₂]₃ in Aceton-d₆ detektiert. Dieses Ergebnis bestätigt, dass Bi[(C₂F₅)₂PO₂]₃ nicht mit Methanol bei Raumtemperatur reagiert.

### Beispiel 3. Darstellung von Triphenylbis[bis(pentafluorethyl)-phosphinyl)]bismut(V), Ph₃Bi[(C₂F₅)₂PO₂]₂

A) Darstellung von Silber(I)bis(pentafluorethyl)phosphinat, {Ag[(C₂F₅)₂PO₂]

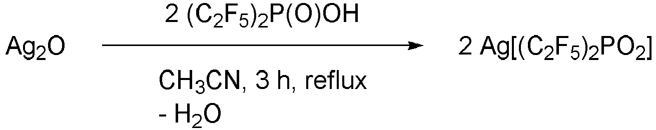

6.17 g Silber(I)oxid (26.63 mmol) werden portionsweise zu einer Lösung von (C₂F₅)₂P(O)OH (15.03 g, 49.77 mmol) in Acetonitril (50 mL) gegeben und die Reaktionsmischung für 3 h zum Rückfluss erhitzt. Alle nicht löslichen Komponenten werden abfiltriert, das Lösungsmittel wird unter vermindertem Druck entfernt und der Rückstand über Nacht im Hochvakuum getrocknet. Der Rückstand wird in Diethylether (50 mL) aufgenommen und über Aktivkohle gerührt. Nach Filtration und Entfernung des Lösungsmittels wird der erhaltene farblose Feststoff im Hochvakuum getrocknet.

Die Ausbeute ist 15.50 g (38.01 mmol, 76 % bezogen auf (C₂F₅)₂P(O)OH).
¹³C{¹⁹F} NMR (CD₃CN, RT), δ, ppm: 112.5 (d, ¹*J*(C,P)=127 Hz; CF2), 119.5 (d, ²*J*(C,P)=16 Hz; CF3);
¹⁹F NMR (CD₃CN, RT), δ, ppm: -125.7 (d, ²*J*(P,F)=69 Hz, 4F; CF2), -81.1 (s, 6F; CF3);
³¹P NMR (CD₃CN, RT), δ, ppm: -0.2 (quint, ²*J*(P,F)=69 Hz).

### B) Darstellung von Triphenylbismutan, Ph₃Bi

In einem 1 L-Dreihalskolben mit Rückflusskühler werden 5.52 g (795 mmol) Lithium in 250 mL Di-ethylether (Et₂O) vorgelegt. Über einen 250 mL-Tropftrichter werden unter Rühren langsam 44 mL (420 mmol) Brombenzol zugetropft, sodass der Diethylether kontinuierlich siedet. Nach beendeter Zugabe wird die grau-braune Suspension für 30 min zum Rückfluss erhitzt und anschließend werden 32.74 g (104 mmol) Bismuttrichlorid zugegeben. Es wird für 15 h bei RT gerührt.

Die Suspension wird unter Eisbadkühlung mit destilliertem Wasser hydrolysiert und mit einer gesättigten Ammoniumchlorid-Lösung neutralisiert. Die organische Phase wird abgetrennt und die wässrige Phase zweimal mit Et₂O extrahiert. Die vereinigten organischen Phasen werden über MgSO₄ getrocknet und das Lösemittel im Hochvakuum entfernt. Der Rückstand wird aus 80 mL Et₂O umkristallisiert. Durch mehrfaches Dekantieren und Einengen der Mutterlauge und Trocknen im Hochvakuum wird Triphenylbismutan in Form farbloser Nadeln erhalten. Die Ausbeute ist 39.26 g (89.21 mmol, 86% bezogen auf Bismuttrichlorid). ¹H NMR (CDCl₃), δ, ppm: 7.8 (m, Hortho), 7.4 (m, Hmeta, Hpara).

### C) Umsetzung zu Triphenylbis[bis(pentafluorethyl)-phosphinyl)]bismut(V), Ph₃Bi[(C₂F₅)₂PO₂]₂

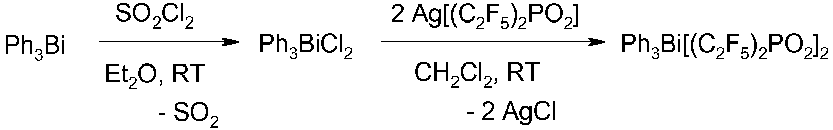

Auf eine Lösung von Triphenylbismutan (1.58 g, 3.59 mmol) in Dichlormethan (20 mL) werden 0.68 g (5.00 mmol) SO₂Cl₂ kondensiert und die Reaktionsmischung für eine Stunde bei Raumtemperatur (RT) gerührt. Alle flüchtigen Bestandteile werden im Hochvakuum entfernt, bis Ph₃BiCl₂ als farbloser Feststoff erhalten wird. Der Rückstand wird in Dichlormethan (20 mL) aufgenommen, 3.24 g (7.20 mmol) Ag[(C₂F₅)₂PO₂] zugegeben und die Reaktionsmischung für eine Stunde bei Raumtemperatur gerührt. Der ausgefallene Feststoff wird abfiltriert und das Filtrat unter vermindertem Druck eingeengt. Das Rohprodukt wird aus Cyclohexan umkristallisiert und Ph₃Bi[(C₂F₅)₂PO₂]₂ nach Trocknen im Hochvakuum als farblose Nadeln erhalten.

Die Ausbeute ist 2.61 g (2.50 mmol, 70 % bezogen auf BiPh₃).
Schmelzpunkt: 130-133 °C, Zersetzung: >170 °C.
¹H NMR ([D₆]Aceton, RT), δ, ppm: 7.7 (t, ³*J*(H,H)=7 Hz, 3H; Hpara), 7.9 (t, ³*J*(H,H)=8 Hz, 6H; Hmeta), 8.1 (d, ³*J*(H,H)=8 Hz, 6H; Hortho);
¹³C{¹H} NMR ([D₆]Aceton, RT), δ, ppm: 133.0 (s; Cpara), 133.6 (s; Cmeta), 134.1 (s; Cortho), 155.2 (s, Cquart);
¹³C{¹⁹F} NMR ([D₆]Aceton, RT), δ, ppm: 110.9 (d, ¹*J*(C,P)=145 Hz; CF₂), 118.1 (d, ²*J*(C,P)=20 Hz; CF₃);
¹⁹F NMR ([D₆]Aceton, RT), δ, ppm: -124.3 (d, ²*J*(P,F)=83 Hz, 8F; CF₂), - 80.7 (m, 12F; CF₃);
³¹P NMR ([D₆]Aceton, RT), δ, ppm: 0.6 (quint, ²*J*(P,F)=83 Hz);
IR (Feststoff): *ṽ* = 408 (w), 445 (s), 501 (s), 512 (s), 547 (w), 567 (s), 597 (m), 636 (w), 651 (w), 677 (m), 727 (m), 750 (w), 962 (s), 985 (s), 992 (s), 1047 (s), 1069 (m), 1105 (s), 1128 (s), 1147 (s), 1205 (vs), 1289 (s), 1442 (w), 1472 (w), 1561 (w), 3070 (vw) cm⁻¹;
MS (ESI): *m*/*z*(%): 741 (100) [Ph₃Bi(C₂F₅)₂PO₂]⁺, 587 (10)
[PhBi(C₂F₅)₂PO₂]⁺, 363 (50) [Ph₂Bi]⁺, 286 (90) [BiPh]⁺, 209 (30) [Bi]⁺; 301 (100) [(C₂F₅)₂PO₂]⁻, 201 (20) [(C₂F₅)PFO₂]⁻;
Elementaranalyse berechnet (gefunden) [%] für C₂₆H₁₅BiF₂₀O₄P₂: C 29.96 (C 29.80); H 1.45 (H 1.53); (N 0.13).

### Vergleichsbeispiel 4. Darstellung von Bi(OTf)₃ (wasserfrei).

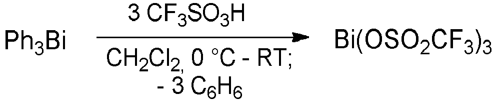

In einem 250 mL-Schlenkkolben werden im Stickstoffgegenstrom 4.50 g (10.0 mmol) Triphenylbismut in 100 mL getrocknetes Dichlormethyn vorgelegt und im Kältebad auf -70 °C gekühlt. Danach werden 2.7 mL (31.0 mmol) Trifluoromethansulfonsäure (Triflic Säure) langsam zugegeben und die Reaktionsmischung über Nacht auf Raumtemperatur erwärmt. Das Reaktionsgemisch wird unter Inertatmosphäre filtriert. Der erhaltene Rückstand wird zweimal mit Dichlormethan gewaschen und im Hochvakuum getrocknet. Es werden 5.59 g (8.5 mmol) eines beigen Feststoffes erhalten. Die Ausbeute an Bi(OTf)₃ beträgt 85%.

Die NMR-analytischen Daten stimmen mit den in der Literatur angegebenen Werten überein [M. Labrouillere, et al., Tetrahedron Lett., 40 (1999), p.285-286].

### Beispiele zur Bestimmung der katalytischen Aktivität:

Die ausgewählten Katalysereaktionen werden in 10-25 mL Schlenkrohren und unter Standard-Schlenkbedingungen durchgeführt. Zunächst wird das Bismutperfluoroalkyl-phosphinat eingewogen und die entsprechende Stöchiometrie der Edukte und des Lösungsmittels angepasst.

Zur Umsatzberechnung wird eine Komponente mit zuvor ausgewählten, charakteristischen NMR-Signalen im Unterschuss eingesetzt. Werden diese Marker-Signale im NMR-Spektrum nicht mehr detektiert, kann von einem quantitativen Umsatz ausgegangen werden. Es erfolgt keine weitere Aufarbeitung oder Bestimmung isolierter Ausbeuten. Die Zeitnahmen erfolgt nach Zugabe des unterschüssig eingesetzten Eduktes. Endpunkt stellt die Probenentnahme dar.

Blindproben zur Bestätigung der katalytischen Aktivität wurden durchgeführt.

### Vergleichsbeispiel 5. Friedel-Crafts Acylierung mit Bi(OSO₂CF₃)₃ als Katalysator

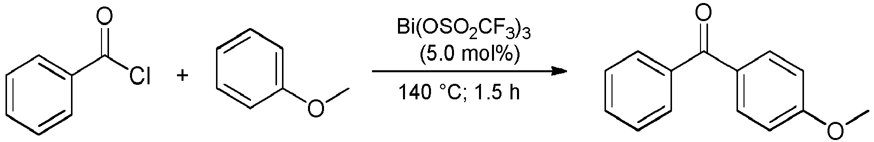

In einem 25 mL-Schlenkrohr werden im Stickstoffgegenstrom 225 mg (0.343 mmol) Bi(OTf)₃ und 1.051 g (7.48 mmol) Benzoylchlorid vorgelegt. Es werden 735 mg (6.80 mmol) Anisol zugefügt und bei 140 °C für 1,5 Stunden gerührt. Die Reaktionsmischung wird schnell gelb, färbt sich später dunkelrot und ist bei Raumtemperatur fest.

Laut ¹H- und ¹³C-NMR-spektroskopische Untersuchungen beträgt der Umsatz zu 4-Methoxybenzophenon 80%.

### Beispiel 6 nicht erfindungsgemäß. Friedel-Crafts-Acylierung mit Bi[(C₂F₅)₂PO₂]₃ als Katalysator

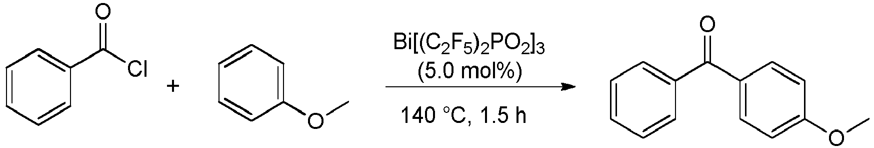

In einem 25 mL-Schlenkrohr werden im Stickstoffgegenstrom 149 mg (0.134 mmol) Bi[(C₂F₅)₂PO₂]₃ und 441 mg (3.137 mmol) Benzoylchlorid vorgelegt. Es werden 293 mg (2.710 mmol) Anisol zugefügt und für 1.5 Stunden bei 140 °C gerührt. Die Lösung wird rasch gelb, später dunkelrot. Der ¹H- und ¹³C-NMR-spektroskopisch detektierte Umsatz zu 4-Methoxybenzophenon beträgt 90 %.

Das Reaktionsprodukt erhält man durch Extraktion der Reaktionsmischung mit Diethylether. Der Extrakt wird zwei Mal mit Wasser und konzentrierter NaHCO₃-Lösung gewaschen. Die organische Phase wird über Magnesiumsulfat getrocknet und das Lösemittel wird unter vermindertem Druck abdestilliert. Der Rückstand wird aus *n*-Hexan/Diethylether (2:1) kristallisiert.

### Beispiel 7. Friedel-Crafts Acylierung mit PhBi[(C₂F₅)₂P(O)O]₂ als Katalysator

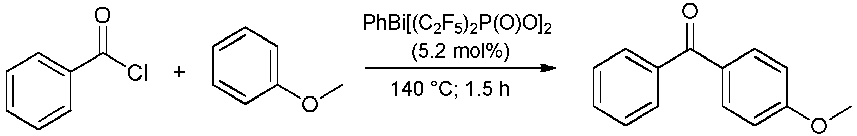

In einem 25 mL-Schlenkrohr werden im Stickstoffgegenstrom 119 mg (0.134 mmol) PhBi(III)-Bis(perfluoroalkylphosphinat) und 850 mg (6.05 mmol) Benzoylchlorid vorgelegt. Es werden 280 mg (2.59 mmol) Anisol zugefügt und bei 140 °C für 1,5 Stunden gerührt. Die Lösung wird schnell gelb, später dunkelrot.
Laut ¹H- und ¹³C-NMR-spektroskopische Untersuchungen beträgt der Umsatz zu 4-Methoxybenzophenon 81%.

### Vergleichsbeispiel 8. Friedel-Crafts Acylierung mit (C₂F₅)₂P(O)OH als Katalysator

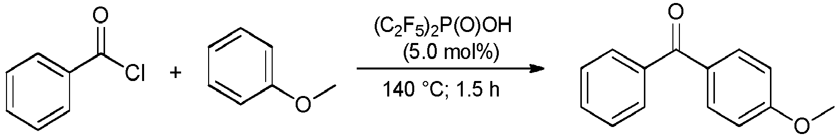

In einem 25 mL-Schlenkrohr werden im Stickstoffgegenstrom 85 mg (0.281 mmol) Bis(pentafluoroethyl)phosphinsäure, (C₂F₅)₂P(O)OH, und 880 mg (6.26 mmol) Benzoylchlorid vorgelegt. Es werden 610 mg (5.64 mmol) Anisol zugefügt und bei 140 °C für 1,5 Stunden gerührt. Die Lösung wird nach kurzer Zeit dunkelrot.
Laut ¹H- und ¹³C-NMR-spektroskopische Untersuchungen beträgt der Umsatz zu 4-Methoxybenzophenon 29%.

### Beispiel 9. Untersuchungen zur Hygroskopie von Bi(OTf)₃, Bi[(C₂F₅)₂P(O)O]₃ und PhBi[(C₂F₅)₂P(O)O]₂ bei Lagerung an der Luft.

**a)** Feinpulvriges, ockerfarbenes Bismuttris(trifluormethansulfonat), Bi(OTf)₃, (wasserfrei; 278 mg; 0.40 mmol) wird auf einem Uhrglas an der Umgebungsluft gelagert. Nach 24 Stunden wird eine Gewichtszunahme von 67 mg festgestellt. Dies entspricht dem Gewicht von neuen Äquivalenten H₂O (3.6 mmol). Das Produkt verändert sich visuell.
**b)** Im vergleichbaren Experiment werden 181 mg (0.20 mmol) feinpulvriges, farbloses PhBi-Bis(pentafluoroethylphosphinat), PhBi[(C₂F₅)₂P(O)O]₂ (wasserfrei) auf einem Uhrglas an der Umgebungsluft gelagert. Nach 24 Stunden wird eine Gewichtszunahme von 1 mg festgestellt. Das Produkt verändert sich visuell nicht.
**c)** Bi[(C₂F₅)₂PO₂]₃: 188 mg (0.169 mmol) feinpulvriges, farbloses Bi[(C₂F₅)₂PO₂]₃ (wasserfrei) werden auf einem Uhrglas an der Umgebungsluft gelagert. Nach 24 h wird eine Gewichtszunahme von 2 mg detektiert. Das Produkt verändert sich visuell nicht.

Diese Experimente zeigen, dass Bi[(C₂F₅)₂P(O)O]₃ und PhBi[(C₂F₅)₂P(O)O]₂ praktisch im Vergleich zum Bismut Triflat, Bi(OTf)₃, nicht hygroskopisch sind.

### Vergleichsbeispiel 10. Friedel-Crafts Acylierung mit Bi(OSO₂CF₃)₂·nH₂O (24 Stunden an Luft gelagert) als Katalysator.

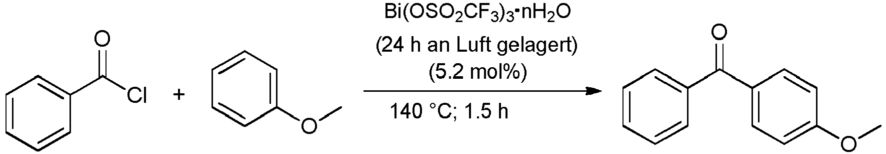

Zur Reproduktion der obigen Ergebnisse werden 250 mg (0.381 mmol) feinpulvriges, ockerfarbenes Bi(OTf)₃ (wasserfrei) auf einem Uhrglas an der Umgebungsluft gelagert. Nach 24 h wird eine Gewichtszunahme von 66 mg detektiert. Dies entspricht dem Gewicht von 9.6 Äquivalenten H₂O (3.442 mmol). Der erhaltene krümelige und lehmfarbene Feststoff wird in ein 25 mL-Schlenkrohr überführt und als Katalysator in einer Friedel-Crafts-Acylierung eingesetzt. Es werden 1.298°mg (9.271 mmol) Benzoylchlorid und 806 mg (7.459 mmol) Anisol unter Umgebungsluft zugefügt und für 1.5 h bei 140 °C gerührt. Die Reaktionsmischung färbt sich tiefrot und ist bei RT fest. Der ¹H- und ¹³C-NMR-spektroskopisch detektierte Umsatz zu 4-Methoxybenzophenon beträgt 72 %.

### Beispiel 11 nicht erfindungsgemäß. Friedel-Crafts Acylierung mit Bi[(C₂F₅)₂PO₂]₃ (24 Stunden an Luft gelagert) als Katalysator.

Bi[(C₂F₅)₂PO₂]₃: 188 mg (0.169 mmol) feinpulvriges, farbloses Bi[(C₂F₅)₂PO₂]₃ (wasserfrei) werden auf einem Uhrglas an der Umgebungsluft gelagert. Nach 24 h wird eine Gewichtszunahme von 2 mg detektiert. Der erhaltene farblose, feinpulvrige Feststoff wird in ein 25 mL-Schlenkrohr überführt und als Katalysator in einer Friedel-Crafts-Acylierung eingesetzt.

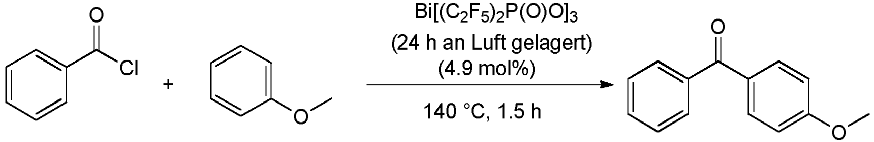

### Es werden 571 mg (64.062 mmol) Benzoylchlorid und 372 mg

(3.440 mmol) Anisol unter Umgebungsluft zugefügt und für 1.5 h bei 140 °C gerührt. Die Reaktionsmischung färbt sich schnell gelb und später tiefrot.

Der ¹H- und ¹³C-NMR-spektroskopisch detektierte Umsatz zu 4-Methoxybenzophenon beträgt 85 %, mit dem Vorteil, dass eine geringere Menge an Katalysator einsetzbar ist, als in Vergleichsbeispiel 9.

### Beispiel 12. Friedel-Crafts Acylierung mit PhBi[(C₂F₅)₂P(O)O]₂ (24 Stunden an Luft gelagert) als Katalysator.

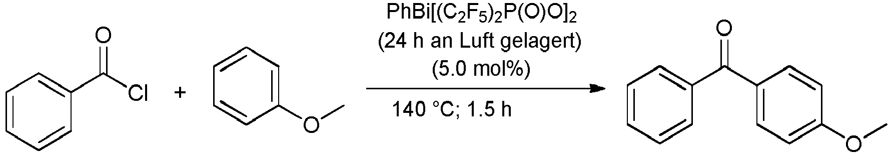

268 mg (0.302 mmol) feinpulvriges, farbloses PhBi-Bis(pentafluoroethylphosphinat), PhBi[(C₂F₅)₂P(O)O]₂, (wasserfrei) werden auf einem Uhrglas an der Umgebungsluft gelagert. Nach 24 Stunden wird eine Gewichtszunahme von 3 mg festgestellt. Der erhaltene farblose, feinpulvrige Feststoff wird in einer Friedel-Crafts Acylierung eingesetzt. Es werden 924 mg (6.57 mmol) Benzoylchlorid und 648 mg (5.99 mmol) Anisol unter Umgebungsluft zugefügt und für 1,5 Stunden bei 140 °C gerührt. Die Reaktionsmischung färbt sich schnell gelb und später tiefrot.

Laut ¹H- und ¹³C-NMR-spektroskopische Untersuchungen beträgt Umsatz zu 4-Methoxybenzophenon 83%.

**Tabelle: Übersicht der durchgeführten Friedel-Crafts-Acylierungen von Anisol und Benzoylchlorid mit unterschiedlichen Katalysatorsystemen.**

| Katalysator^{a)} | Umsatz^{b)} |
|---|---|
| Bi(OTf)₃ (wasserfrei) | 80 % |
| Bi(OTf)₃ * n H₂O | 72 % |
| (24 h an Luft gelagert) | |
| (C₂F₅)₂P(O)OH | 29 % |
| PhBi[(C₂F₅)₂P(O)O]₂ | 81 % |
| PhBi[(C₂F₅)₂P(O)O]₂ | 83 % |
| (24 h an Luft gelagert) | |
| Bi[(C₂F₅)₂P(O)O]₃ | 90 % |
| Bi[(C₂F₅)₂P(O)O]₃ | 85 % |
| (24 h an Luft gelagert) | |

| | |
|---|---|
| ^{a)} Katalysatormenge: ca. 5 mol%; Reaktionsbedingungen: 1.5 h, 140 °C; ^{b)} Umsatzberechnungen beruhen auf ¹H- und ¹³C-NMR-spektroskopischen Messungen bezogen auf Anisol. | |

### Beispiel13. Friedel-Crafts-Alkylierung mit PhBi[(C₂F₅)₂P(O)O]₂ als Katalysator.

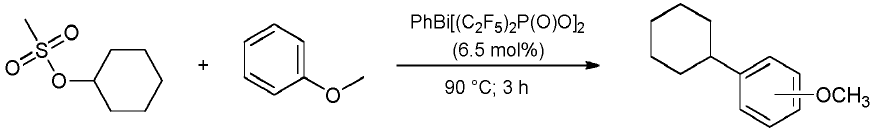

In einem 25 mL-Schlenkrohr werden im Stickstoffgegenstrom 335 mg (0.377 mmol) Bi(III)-Phosphinatkomplex, PhBi[(C₂F₅)₂P(O)O]₂, und 1.036 g (5.812 mmol) Cyclohexylmethansulfonat vorgelegt. Es werden 1.295 g (11.974 mmol) Anisol zugefügt und bei 90 °C gerührt. Nach 3 h wird über ¹H- und ¹³C-NMR-spektroskopische Untersuchungen ein quantitativer Umsatz detektiert. Die NMR-analytischen Daten stimmen mit dern aus der Literatur bekannten Werten überein [R. P. Singh, R. M. Kamble, K. L. Chandra, P. Saravanan, V. K. Singh, Tetrahedron, 2001, 57, 241-247; H. Kotsuki, T. Oshisi, M. Inoue, Synlett, 1998, 1998, 255-256].

### Beispiel 14. Diels-Alder Addition mit PhBi[(C₂F₅)₂P(O)O]₂ als Katalysator.

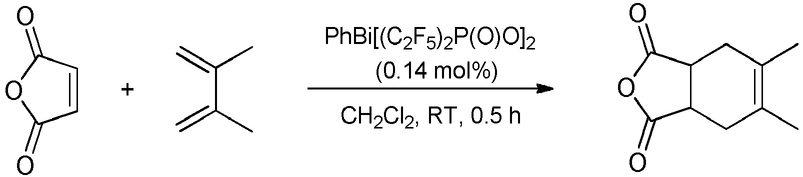

In einem 25 mL-Schlenkrohr werden im Stickstoffgegenstrom 13 mg (0.0146 mmol) Bi(III)-Phosphinatkomplex, PhBi[(C₂F₅)₂P(O)O]₂, und 993 mg (10.127 mmol) Maleinsäureanhydrid in 5 mL Dichlormethan suspendiert. Es werden 2.45 g (3.37 ml, 29.83 mmol) 2,3-Dimethylbutadien zugefügt und bei Raumtemperatur gerührt. Nach 30 min wird über ¹H- und ¹³C-NMR-spektroskopische Untersuchungen ein quantitativer Umsatz detektiert.

Die NMR-analytischen Daten stimmen mit den aus der Literatur bekannten Werten überein [C.E. Song, E.J. Roh, S.-g. Lee, W.H. Shim, J.H. Choi, Chem. Commun. 2001, p. 1122-1123].

### Beispiel 15. Diels-Alder Addition mit PhBi[(C₂F₅)₂P(O)O]₂ als Katalysator.

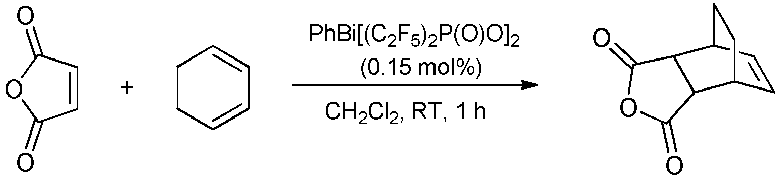

In einem 25 mL-Schlenkrohr werden im Stickstoffgegenstrom 12 mg (0.0135 mmol) Bi(III)-Phosphinatkomplex, PhBi[(C₂F₅)₂P(O)O]₂, und 893 mg (9.107 mmol) Maleinsäureanhydrid in 5 mL Dichlormethan suspendiert. Es werden 2.20 g (2.6 ml, 27.48 mmol) 1,3-Cyclohexadien zugefügt und bei Raumtemperatur gerührt. Die Lösung färbt sich sofort gelb. Nach 1 h wird über ¹H- und ¹³C-NMR-spektroskopische Untersuchungen ein quantitativer Umsatz detektiert.

Die NMR-analytischen Daten stimmen mit den aus der Literatur bekannten Werten überein [C.E. Song, E.J. Roh, S.-g. Lee, W.H. Shim, J.H. Choi, Chem. Commun. 2001, p. 1122-1123].

### Beispiel 16. Strecker-Reaktion katalysiert mit PhBi[(C₂F₅)₂P(O)O]₂

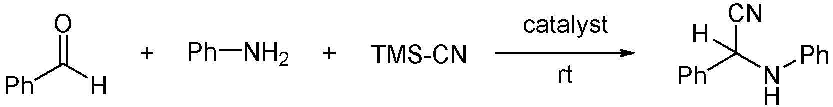

In einem 25 mL-Schlenkrohr werden im Stickstoffgegenstrom 117 mg (0.132 mmol) Bi(III)-Phosphinatkomplex, PhBi[(C₂F₅)₂P(O)O]₂, in 5 mL Dichlormethan suspendiert und 0.20 mL (210 mg; 1.978 mmol) Benzaldehyd sowie 0.18 mL (184 mg; 1.972 mmol) Anilin zugefügt und bei Raumtemperatur gerührt. Zum Start der Reaktion werden 0.37 mL (292 mg; 2.946 mmol) Trimethylsilylcyanid zugegeben. Nach 30 min wird über ¹H- und ¹³C-NMR-spektroskopische Untersuchungen ein quantitativer Umsatz detektiert. Die NMR-analytischen Daten stimmen mit der Literatur bekannten Werten überein.

Die Ergebnisse in Vergleich mit Literatur bekannten Daten sind in der folgenden Tabellezusammengefasst.

**Tabelle: Vergleich der Reaktionsbedingungen, Katalysatormengen und Umsätze der Strecker-Reaktion von Benzaldehyd und Anilin literaturbekannter Katalysatoren und des Bi(III)-Phosphinatkomplexes.**

| **Katalysator** | **[mol%]** | **Lösemittel** | **Zeit** | **Umsatz** |
|---|---|---|---|---|
| [1] BiCl₃ | 10 | CH₃CN | 10 h | 84 % |
| [2] Bi(NO₃)₃ | 10 | CH₃CN | 1 h | 94 % |
| **PhBi[(C₂F₅)₂P(O)O]₂** | **6.7** | **CH₂Cl₂** | **0.5 h** | **>97 %*** |

| | | | | |
|---|---|---|---|---|
| * Umsatzberechnungen beruhen auf ¹H- und ¹³C-NMR-spektroskopischen Messungen bezogen auf Benzaldehyd. | | | | |

[6] S. K. De, R. A. Gibbs, Tetrahedron Letters, 2004, 45, 7407-7408.
[7] N. M. Leonard, L. C. Wieland, R. S. Mohan, Tetrahedron, 2002, 58, 8373-8397.

### Beispiel 17. Strecker-Reaktion katalysiert mit PhBi[(C₂F₅)₂P(O)O]₂

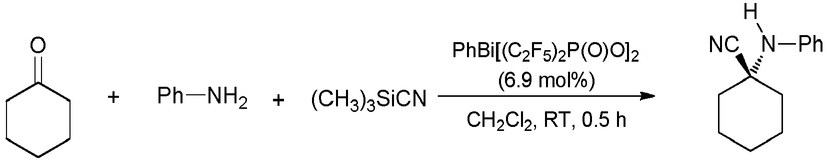

In einem 25 mL-Schlenkrohr werden im Stickstoffgegenstrom 107 mg (0.121 mmol) Bi(III)-Phosphinatkomplex, PhBi[(C₂F₅)₂P(O)O]₂, in 5 mL Dichlormethan suspendiert und 0.18 mL (0.171 mg; 1.742 mmol) Cyclohexanon sowie 0.18 mL (0.184 mg; 1.972 mmol) Anilin zugefügt und bei Raumtemperatur gerührt. Zum Start der Reaktion werden 0.32 mL (253 mg; 2.548 mmol) Trimethylsilylcyanid zugegeben.Nach 30 min wird über ¹H- und ¹³C-NMR-spektroskopische Untersuchungen ein quantitativer Umsatz detektiert. Die NMR-analytischen Daten stimmen mit den aus der Literatur bekannten Werten überein [G. K. S. Prakash, T. Mathew, C. Panja, S. Alconcel, H. Vaghoo, C. Do, G. A. Olah, Proceedings of the National Academy of Sciences, 2007, 104, 3703-3706].

### Beispiel 18. Diels-Alder-Addition mit Ph₃Bi[(C₂F₅)₂PO₂]₂ als Katalysator

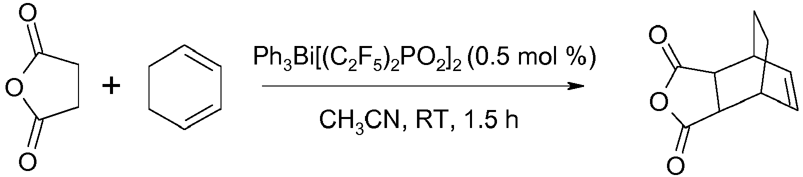

In einem 25 mL-Schlenkrohr werden im Stickstoffgegenstrom 28 mg (0.027 mmol) Ph₃Bi[(C₂F₅)₂PO₂]₂ und 624 mg (6.364 mmol) Maleinsäureanhydrid in 4 mL Acetonitril gelöst. Es werden 862 mg (1.0 ml, 10.753 mmol) 1,3-Cyclohexadien zugefügt und bei Raumtemperatur gerührt. Die Lösung färbt sich sofort gelb und trübt sich. Nach 1.5 h wird über ¹H- und ¹³C-NMR-spektroskopische Untersuchungen ein quantitativer Umsatz detektiert. Die NMR-analytischen Daten stimmen mit den literaturbekannten Werten überein [C.E. Song, E.J. Roh, S.-G. Lee, W.H. Shim, J.H. Choi, Chem. Commun. 2001, p. 1122-1123].

### Beispiel 19. Friedel-Crafts-Acylierung mit Ph₃Bi[(C₂F₅)₂PO₂]₂ als Katalysator

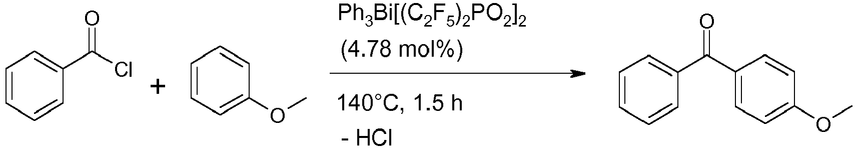

In einem 25 mL-Schlenkrohr werden im Stickstoffgegenstrom 59 mg (0.057 mmol) Ph₃Bi[(C₂F₅)₂PO₂]₂ und 299 mg (2.127 mmol) Benzoylchlorid vorgelegt. Es werden 128 mg (1.184 mmol) Anisol zugefügt und bei 140 °C für 1.5 Stunden gerührt. Die Lösung wird schnell gelb, später dunkelrot. Der ¹H- und ¹³C-NMR-spektroskopisch detektierte Umsatz zu 4-Methoxybenzophenon beträgt 86 %.

### Beispiel 20. Friedel-Crafts-Acylierung mit Ph₃Bi[(C₂F₅)₂PO₂]₂ (24 Stunden an Luft gelagert) als Katalysator

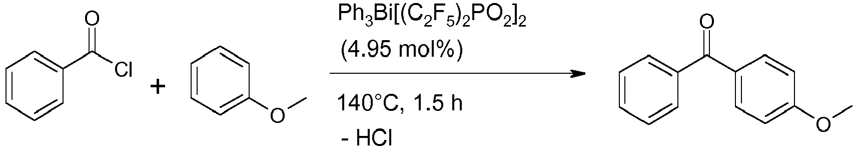

Zur Untersuchung des Hygroskopieverhaltens werden 145 mg (0.139 mmol) farbloses, nadelförmiges Ph₃Bi[(C₂F₅)₂PO₂]₂ auf einem Uhrglas an der Umgebungsluft gelagert. Nach 24 h wird keine Gewichtszunahme detektiert. Der erhaltene farblose, nadelförmige Feststoff wird in ein 25 mL-Schlenkrohr überführt und als Katalysator in einer Friedel-Crafts-Acylierung eingesetzt. Es werden 614 mg (4.368 mmol) Benzoylchlorid und 304 mg (2.811 mmol) Anisol unter Umgebungsluft zugefügt und für 1.5 h bei 140 °C gerührt. Die Lösung wird schnell gelb, später dunkelrot. Der ¹H- und ¹³C-NMR-spektroskopisch detektierte Umsatz zu 4-Methoxybenzophenon beträgt 88 %.

### Beispiel 21. Darstellung von Ph₂Bi[O(O)P(C₂F₅)₂]

Zu einer Lösung von 1.25 g (2.84 mmol) Tiphenylbismut in Dichlormethan (30 mL) werden 0.82 g (2.7 mmol) Bis(pentafluorethyl)phosphinsäure tropfenweise zugegeben. Das Reaktionsgemisch wird für 5 Stunden zum Rückfluss erhitzt. Die überstehende Lösung wird dekantiert und der verbleibende Feststoff wird zwei Mal mit Dichlormethan (10 mL) gewaschen und im Hochvakuum getrocknet. Es wird ein farbloser, feinpulvriger Feststoff erhalten.

Ausbeute an Ph₂Bi[O(O)P(C₂F₅)₂]: 1.41 g (2.1 mmol, 78 %). Schmelzpunkt: 270 °C.

**Tabelle:**

| NMR-Daten von Ph₂Bi[O(O)P(C₂F₅)₂] in [D₄]methanol, RT | | | | |
|---|---|---|---|---|
| Kern | δ [ppm] | Aufspaltung | J [Hz] | Zuordnung |
| ¹H | 8.4 | m | | ortho H |
| | 7.9 | m | | meta H |
| | 7.5 | m | | para H |
| ¹³C{¹H} | 194.3 | s | | C_{quart} |
| | 136.8 | s | | Cₒᵣₜₕₒ |
| | 132.1 | s | | Cₘₑₜₐ |
| | 129.1 | s | | Cₚₐᵣₐ |
| ¹³C{¹⁹F} | 119.0 | d | ²*J*_{CP} = 17.0 | **C**F₃CF₂ |
| | 111.8 | d | ¹*J*_{CP} = 137.0 | CF₃**C**F₂ |
| ¹⁹F | -82.0 | m | - | C**F**₃CF₂ |
| | -126.7 | d | ²*J*_{PF} = 74.0 | CF₃C**F**₂ |
| ³¹P | -0.2 | qui | ²*J*_{FP} = 74.0 | **P** |

### Beispiel 22: Darstellung von PhBi[O(O)P(C₄F₉)₂]₂

Eine wässrige Lösung von Bis(nonafluorbutyl)phosphinsäure wird innerhalb von 24 Stunden zur Trockne eingeengt und man erhält 7.63 g (15.2 mmol) der Säure als Feststoff. Diese Säure wird zu einer Lösung von 2.20 g (5 mmol) Tiphenylbismut in Methanol (50 mL) zugegeben und die Reaktionsmischung wird für 20 Stunden zum Rückfluss erhitzt. Nichtlösliche Komponenten werden filtriert und das Lösemittel wird unter reduziertem Druck entfernt. Nach Zugabe von Diethylether (50 mL) wird der ausfallende Feststoff filtriert, vier Mal mit Diethylether (20 mL) gewaschen und im Hochvakuum getrocknet.

Ausbeute an PhBi[O(O)P(C₄F₉)₂]₂: 4.35 g (3.4 mmol, 68 %). Zersetzungspunkt: >490 °C.

**Tabelle:**

| NMR-Daten von PhBi[O(O)P(C₄F₉)₂]₂ in [D₄]methanol, RT | | | | |
|---|---|---|---|---|
| Kern | δ [ppm] | Aufspaltung | J [Hz] | Zuordnung |
| ¹H | 8.8 | m | | ortho H |
| | 8.3 | m | | meta H |
| | 7.6 | m | | para H |
| ¹³C{¹H} | 230.9 | s | | C_{quart} |
| | 137.1 | s | | Cₒᵣₜₕₒ |
| | 134.2 | s | | Cₘₑₜₐ |
| | 129.9 | s | | Cₚₐᵣₐ |
| ¹³C{¹⁹F} | 109.0 | d | ³*J*_{CP} = 3 | CF₃**C**F₂CF₂CF₂ |
| | 111.3 | d | ²*J*_{CP} = 10 | CF₃CF₂**C**F₂CF₂ |
| | 114.5 | d | ¹*J*_{CP} = 134 | CF₃CF₂CF₂**C**F₂ |
| | 117.5 | s | | CF₃ |
| ¹⁹F | -82.6 | m | | C**F₃** |
| | -121.9 | m | | CF₃CF₂C**F**₂CF₂ |
| | -122.9 | dm | ²*J*_{PF} = 75 | CF₃CF₂CF₂C**F**₂ |
| | -127.1 | m | | CF₃C**F**₂CF₂CF₂ |
| ³¹P | 1.1 | qui | ²*J*_{PF} = 75 | **P** |

## Patentansprüche

1. Verbindungen der Formel (Ia) oder (Ib)
ArₓBi[OP(O)(R_{f})₂]₃₋ₓ (Ia),
Ar₃Bi[OP(O)(R_{f})₂]₂ (Ib)
wobei
Ar jeweils unabhängig voneinander Phenyl, Naphthyl, Anthracenyl oder Phenanthryl bedeutet, das einfach oder mehrfach durch Halogen,
Alkyl, fluoriertes Alkyl, OAlkyl, NO₂ oder CN substituiert sein kann;
Alkyl eine lineare oder verzweigte Alkylgruppe mit 1 bis 12 C-Atomen bedeutet,
Halogen F, Cl, Br oder I bedeutet,
R_{f} jeweils unabhängig voneinander eine geradkettige oder verzweigte Perfluoralkylgruppe mit 1 bis 8 C-Atomen bedeutet und
x 1 oder 2 bedeutet.

2. Verbindungen nach Anspruch 1, wobei wobei Ar bei jedem Auftreten gleich ist.

3. Verbindungen nach Anspruch 1 oder 2, wobei die Perfluoralkylgruppe R_{f} bei jedem Auftreten gleich ist.

4. Verbindungen nach einem oder mehreren der Ansprüche 1 bis 3, wobei R_{f} aus Pentafluorethyl oder *n*-Nonafluorbutyl ausgewählt wird.

5. Verfahren zur Herstellung von Verbindungen der Formel (Ia) nach einem oder mehreren der Ansprüche 1 bis 4, **dadurch gekennzeichnet, dass** eine Verbindung der Formel (II)
HOP(O)(R_{f})₂ (II),
wobei
R_{f} jeweils unabhängig voneinander eine geradkettige oder verzweigte Perfluoralkylgruppe mit 1 bis 8 C-Atomen bedeutet,
mit Triarylbismutan umgesetzt wird, wobei das Aryl jeweils unabhängig voneinander Phenyl, Naphthyl, Anthracenyl oder Phenanthryl bedeutet, das einfach oder mehrfach durch Halogen, Alkyl, fluoriertes Alkyl, OAlkyl, NO₂ oder CN substituiert sein kann.

6. Verfahren zur Herstellung von Verbindungen der Formel (Ib) nach einem oder mehreren der Ansprüche 1 bis 4, **dadurch gekennzeichnet, dass** Triarylbismutan zu Triaryldichlorbismutan umgesetzt wird, wobei Aryl jeweils unabhängig voneinander Phenyl, Naphthyl, Anthracenyl oder Phenanthryl bedeutet, das einfach oder mehrfach durch Halogen, Alkyl, fluoriertes Alkyl, OAlkyl, NO₂ oder CN substituiert sein kann,
und Triaryldichlorbismutan mit einer Verbindung der Formel (III) umgesetzt wird,
Ag[(R_{f})₂PO₂] (III),
wobei
Rf jeweils unabhängig voneinander eine geradkettige oder verzweigte Perfluoralkylgruppe mit 1 bis 8 C-Atomen bedeutet.

7. Verfahren zur Herstellung von Verbindungen der Formel (Ib) nach einem oder mehreren der Ansprüche 1 bis 4, **dadurch gekennzeichnet, dass** eine Verbindung der Formel (II),
HOP(O)(R_{f})₂ (II),
wobei
R_{f} jeweils unabhängig voneinander eine geradkettige oder verzweigte Perfluoralkylgruppe mit 1 bis 8 C-Atomen bedeutet,
mit Triarylbismut(V)carbonat, Triarylbismut(V)diacetat oder Triarylbismut(V)dichlorid umgesetzt wird, wobei das Aryl jeweils unabhängig voneinander Phenyl, Naphthyl, Anthracenyl oder Phenanthryl bedeutet, das einfach oder mehrfach durch Halogen, Alkyl, fluoriertes Alkyl, OAlkyl, NO₂ oder CN substituiert sein kann.

8. Lewis-Säure-Katalysator nach einem oder mehreren der Ansprüche 1 bis 4 zur Verwendung in einer Lewis-Säure-katalysierten Reaktion ausgewählt aus einer Kondensationsreaktion, Alkoholyse, Aldol-Reaktion, Mukaiyama-Aldol-Reaktion, Gattermann-Koch-Reaktion, Beckmann- und Fries-Umlagerung, Friedel-Crafts-Acylierung, Friedel-Crafts-Alkylierung, Mannich-Reaktion, Diels-Alder-Reaktion, Aza-Diels-Alder-Reaktion, Baylis-Hillman-Reaktion, Reformatskyreaktion, Claisen-Umlagerung, Cyclisierungsreaktion nach Prins, Allylierung von Carbonylverbindungen, Cyanierung von Aldehyden und Ketonen, Cyanosilylierung von Aldehyden und Ketonen, Strecker-Reaktion, 1,3-dipolaren Cycloaddition oder Michael-Reaktion.

9. Verwendung von Verbindungen nach einem oder mehreren der Ansprüche 1 bis 4 als Lewis-Säure-Katalysatoren.

## Claims

1. Compounds of the formula (Ia) or (Ib)
ArₓBi[OP(O)(R_{f})₂]₃₋ₓ (Ia),
Ar₃Bi[OP(O)(R_{f})₂]₂ (Ib)
where
Ar in each case, independently of one another, denotes phenyl, naphthyl, anthracenyl or phenanthryl, which may be mono- or polysubstituted by halogen, alkyl, fluorinated alkyl, O-alkyl, NO₂ or CN,
alkyl denotes a linear or branched alkyl group having 1 to 12 C atoms, halogen denotes F, Cl, Br or I,
R_{f} in each case, independently of one another, denotes a straight-chain or branched perfluoroalkyl group having 1 to 8 C atoms and
x denotes 1 or 2.

2. Compounds according to Claim 1, where Ar is identical on each occurrence.

3. Compounds according to Claim 1 or 2, where the perfluoroalkyl group R_{f} is identical on each occurrence.

4. Compounds according to one or more of Claims 1 to 3, where Rf is selected from pentafluoroethyl or *n*-nonafluorobutyl.

5. Process for the preparation of compounds of the formula (Ia) according to one or more of Claims 1 to 4, **characterised in that** a compound of the formula (II)
HOP(O)(R_{f})₂ (II),
where
R_{f} in each case, independently of one another, denotes a straight-chain or branched perfluoroalkyl group having 1 to 8 C atoms,
is reacted with triarylbismuthane, where the aryl in each case, independently of one another, denotes phenyl, naphthyl, anthracenyl or phenanthryl, which may be mono- or polysubstituted by halogen, alkyl, fluorinated alkyl, O-alkyl, NO₂ or CN.

6. Process for the preparation of compounds of the formula (Ib) according to one or more of Claims 1 to 4, **characterised in that** triarylbismuthane is converted to triaryldichlorobismuthane, where aryl in each case, independently of one another, denotes phenyl, naphthyl, anthracenyl or phenanthryl, which may be mono- or polysubstituted by halogen, alkyl, fluorinated alkyl, O-alkyl, NO₂ or CN,
and triaryldichlorobismuthane is reacted with a compound of the formula (III),
Ag[(R_{f})₂PO₂] (III),
where
R_{f} in each case, independently of one another, denotes a straight-chain or branched perfluoroalkyl group having 1 to 8 C atoms.

7. Process for the preparation of compounds of the formula (Ib) according to one or more of Claims 1 to 4, **characterised in that** a compound of the formula (II),
HOP(O)(R_{f})₂ (II),
where
R_{f} in each case, independently of one another, denotes a straight-chain or branched perfluoroalkyl group having 1 to 8 C atoms,
is reacted with triarylbismuth(V) carbonate, triarylbismuth(V) diacetate or triarylbismuth(V) dichloride, where the aryl in each case, independently of one another, denotes phenyl, naphthyl, anthracenyl or phenanthryl, which may be mono- or polysubstituted by halogen, alkyl, fluorinated alkyl, O-alkyl, NO₂ or CN.

8. Lewis acid catalyst according to one or more of Claims 1 to 4 for use in a Lewis acid-catalysed reaction selected from a condensation reaction, alcoholysis, aldol reaction, Mukaiyama aldol reaction, Gattermann-Koch reaction, Beckmann and Fries rearrangement, Friedel-Crafts acylation, Friedel-Crafts alkylation, Mannich reaction, Diels-Alder reaction, aza-Diels-Alder reaction, Baylis-Hillman reaction, Reformatsky reaction, Claisen rearrangement, Prins cyclisation reaction, allylation of carbonyl compounds, cyanation of aldehydes and ketones, cyanosilylation of aldehydes and ketones, Strecker reaction, 1,3-dipolar cycloaddition or Michael reaction.

9. Use of compounds according to one or more of Claims 1 to 4 as Lewis acid catalysts.

## Revendications

1. Composés de formule (Ia) ou (Ib)
ArₓBi[OP(O)(R_{f})₂]₃₋ₓ (Ia),
Ar₃Bi[OP(O)(R_{f})₂]₂ (Ib)
dans lesquels
Ar dans chaque cas, indépendamment les uns des autres, désigne phényle, naphtyle, anthracényle ou phénanthryle, qui peut être mono- ou polysubstitué par halogène, alkyle, alkyle fluoré, O-alkyle, NO₂ ou CN,
alkyle désigne un groupement alkyle linéaire ou ramifié ayant de 1 à 12 atomes de C,
halogène désigne F, Cl, Br ou I,
R_{f} dans chaque cas, indépendamment les uns des autres, désigne un groupement perfluoroalkyle à chaîne linéaire ou ramifiée ayant de 1 à 8 atomes de C et
x désigne 1 ou 2.

2. Composés selon la revendication 1, dans lesquels Ar est identique à chaque occurrence.

3. Composés selon la revendication 1 ou 2, dans lesquels le groupement perfluoroalkyle Rf est identique à chaque occurrence.

4. Composés selon l'une ou plusieurs parmi les revendications 1 à 3, dans lesquels Rf est choisi parmi pentafluoroéthyle ou n-nonafluoro-butyle.

5. Procédé de préparation de composés de formule (la) selon l'une ou plusieurs parmi les revendications 1 à 4, **caractérisé en ce qu'**un composé de formule (II)
HOP(O)(R_{f})₂ (II),
où
R_{f} dans chaque cas, indépendamment les uns des autres, désigne un groupement perfluoroalkyle à chaîne linéaire ou ramifiée ayant de 1 à 8 atomes de C,
est réagi avec du triarylbismuthane, où le groupement aryle dans chaque cas, indépendamment les uns des autres, désigne phényle, naphtyle, anthracényle ou phénanthryle, qui peut être mono- ou polysubstitué par halogène, alkyle, alkyle fluoré, O-alkyle, NO₂ ou CN.

6. Procédé de préparation de composés de formule (Ib) selon l'une ou plusieurs parmi les revendications 1 à 4, **caractérisé en ce que** le triarylbismuthane est converti en triaryldichlorobismuthane, où le groupement aryle dans chaque cas, indépendamment les uns des autres, désigne phényle, naphtyle, anthracényle ou phénanthryle, qui peut être mono- ou polysubstitué par halogène, alkyle, alkyle fluoré, O-alkyle, NO₂ ou CN,
et le triaryldichlorobismuthane est réagi avec un composé de formule (III),
Ag[(R_{f})₂PO₂] (III),
où
R_{f} dans chaque cas, indépendamment les uns des autres, désigne un groupement perfluoroalkyle à chaîne linéaire ou ramifiée ayant de 1 à 8 atomes de C.

7. Procédé de préparation de composés de formule (Ib) selon l'une ou plusieurs parmi les revendications 1 à 4, **caractérisé en ce qu'**un composé de formule (II),
HOP(O)(R_{f})₂ (II),
où
R_{f} dans chaque cas, indépendamment les uns des autres, désigne un groupement perfluoroalkyle à chaîne linéaire ou ramifiée ayant de 1 à 8 atomes de C,
est réagi avec du carbonate de triarylbismuth(V), du diacétate de triaryl-bismuth(V) ou du dichlorure de triarylbismuth(V), où le groupement aryle dans chaque cas, indépendamment les uns des autres, désigne phényle, naphtyle, anthracényle ou phénanthryle, qui peut être mono- ou polysubstitué par halogène, alkyle, alkyle fluoré, O-alkyle, NO₂ ou CN.

8. Catalyseur de type acide de Lewis selon l'une ou plusieurs parmi les revendications 1 à 4, pour une utilisation dans une réaction catalysée par un acide de Lewis, choisie parmi une réaction de condensation, une alcoolyse, une réaction d'aldol, une réaction d'aldol de Mukaiyama, une réaction de Gattermann-Koch, un réarrangement de Beckmann et Fries, une acylation de Friedel-Crafts, une alkylation de Friedel-Crafts, une réaction de Mannich, une réaction de Diels-Alder, une réaction d'aza-Diels-Alder, une réaction de Baylis-Hillman, une réaction de Reformatsky, un réarrangement de Claisen, une réaction de cyclisation de Prins, une allylation de composés carbonyle, une cyanation d'aldéhydes et de cétones, une cyanosilylation d'aldéhydes et de cétones, une réaction de Strecker, une cycloaddition 1,3-dipolaire ou une réaction de Michael.

9. Utilisation de composés selon l'une ou plusieurs parmi les revendications 1 à 4, comme catalyseurs de type acide de Lewis.
